# EUROPÄISCHE PATENTSCHRIFT

(11) **EP 2 181 920 B1**
(45) Veröffentlichungstag und Bekanntmachung des Hinweises auf die Patenterteilung: **04.04.2018**
(21) Anmeldenummer: 09174111.6
(22) Anmeldetag: 27.10.2009
(51) Int. Cl.: B63H 23/02, F16K 35/06

(54) **Hydraulische Steuerung für ein Schiffsgetriebe**
Hydraulic control for a ship transmission
Commande hydraulique pour une transmission de bateau

(30) Priorität: 29.10.2008 DE 102008043273
(43) Veröffentlichungstag der Anmeldung: 05.05.2010
(73) Patentinhaber: ZF Friedrichshafen AG, 88046 Friedrichshafen (DE)
(72) Erfinder: Stamml, Michael, 88356 Ostrach (DE); Rowe, Gerald, 88131 Lindau (DE); Sagawe, Joachim, 88048 Friedrichshafen (DE)

(56) Entgegenhaltungen:
- EP-A2- 1 426 622
- EP-A2- 1 691 083
- DE-A1- 4 009 978
- DE-U1- 20 023 901
- US-A- 3 957 077

## Beschreibung

Die vorliegende Erfindung betrifft eine hydraulische Steuerung für ein Schiffsgetriebe gemäß der im Oberbegriff des Patentanspruches 1 näher definierten Art.

Hydraulische Steuerungen für Schiffsgetriebe sind bekannt. Üblicherweise umfassen die hydraulischen Steuerungen Ventile, die im Normalbetrieb elektrisch betätigt werden. Zu diesen zählen unter anderem auch die Vorsteuerventile. Im Fall eines Stromausfalles, also in einem Notfall, muss es dennoch möglich sein, das Schiffsgetriebe anzusteuern. Deshalb ist eine manuelle mechanische Notbetätigung erforderlich. Beispielsweise kann die Notbetätigung mittels Rastbolzen, Bajonettverschlüssen, Rastschrauben oder dergleichen erfolgen. Jedoch besteht bei dieser Art der Betätigung die Gefahr, dass eine unbewusste, ungewollte Betätigung durch den Bediener erfolgt, welches unbedingt zu vermeiden ist.

Elektrisch betätigte Steuerventile mit Notbetätigungseinrichtung sind beispielsweise aus EP-A-1 426 622 oder aus DE-U-200 23 901 bekannt. Der vorliegenden Erfindung liegt die Aufgabe zu Grunde, eine hydraulische Steuerung für ein Schiffsgetriebe der eingangs beschriebenen Gattung vorzuschlagen, bei der eine unbewusste manuelle Notbetätigung nicht möglich ist und die sich darüberhinaus durch eine bedienerfreundliche Handhabung auszeichnet. Diese Aufgabe wird erfindungsgemäß durch die Merkmale des Patentanspruches 1 gelöst. Weitere vorteilhafte Ausgestaltungen ergeben sich aus den Unteransprüchen und den Zeichnungen.

Die der Erfindung zu Grunde liegende Aufgabe wird durch eine hydraulische Steuerung bzw. Steuereinrichtung für ein Schiffsgetriebe mit zumindest einem elektrisch betätigten Vorsteuerventil gelöst, welches zumindest eine Notbetätigungseinrichtung zum manuellen Betätigen des Vorsteuerventils umfasst, wobei die Notbetätigungseinrichtung nur mit einem Werkzeug betätigbar ist.

Beispielsweise bei einem Stromausfall kann so das Werkzeug von einem Bediener verwendet werden, um die Notbetätigungseinrichtung bewusst zu betätigen. Durch die unbedingte Verwendung des Werkzeuges wird ein unbeabsichtigtes Betätigen der Notbetätigungseinrichtung durch einen Bediener verhindert. Erfindungsgemäss wird eine Betätigungsschraube an dem Vorsteuerventil als Notbetätigungseinrichtung verwendet. Dies hat den Vorteil, dass die Notbetätigung solange aktiviert ist, bis die Betätigungsschraube von dem Bediener wieder entfernt wird.

Mit besonderem Vorteil kann das Werkzeug zum Betätigen des Vorsteuerventils in unmittelbarer Nähe des zu betätigenden Vorsteuerventils angeordnet werden. Das Werkzeug ist somit an einer gut zugänglichen Stelle in unmittelbarer Nähe zu den Ventilen untergebracht, so dass im Notfall eine schnelle Bedienung des Vorsteuerventils durch einen Bediener erfolgen kann. Die Notbetätigung kann zum Beispiel auch einfach verständlich und bildlich dargestellt werden. Beispielsweise kann zu diesem Zweck ein zusätzliches Schild am Vorsteuerventil oder dergleichen angebracht werden und das Notwerkzeug entsprechend bezeichnet werden. Vorzugsweise kann das Werkzeug an dem Gehäuse der Steuerung befestigt sein. Es sind jedoch auch andere Lagerorte des Werkzeuges denkbar.

Im Rahmen einer vorteilhaften Weiterbildung der Erfindung kann vorgesehen sein, dass das Werkzeug in einer Gewindebohrung oder dergleichen des Gehäuses der Steuerung lösbar befestigt ist. Durch diese Art der Befestigung werden einerseits eine bauraumsparende Unterbringung des Werkzeuges und andererseits eine schnelle Entnahme des Werkzeuges sichergestellt.

Um ein Lösen bzw. einen Verlust des Werkzeuges, wie beispielsweise durch Schwingungen im Betrieb, zu vermeiden, sollte das Werkzeug in entsprechender Weise gesichert sein. Mögliche Sicherungsmittel sind z.B. Federringe gegen das Lösen der Schraubverbindung oder eine Koppelung des Werkzeuges mit dem Steuerungsgehäuse, z.B. mittels einer Kette.

Vorzugsweise kann das Werkzeug einen Griffbereich umfassen, an dem z.B. ein längliches Profilelement oder dergleichen mit einem Außengewinde vorgesehen ist. Das Außengewinde dient dabei zum Befestigen in einem korrespondierenden Innengewinde in der Gewindebohrung des Gehäuses der Steuerung. Ferner kann an dem Profilelement insbesondere an seinem freien Ende ein Aussenmehrkant oder dergleichen vorgesehen sein. Mit dem Aussenmehrkant des Werkzeuges kann z.B. die Betätigungsschraube der Notbetätigungseinrichtung betätigt werden, wenn diese einen mit dem Aussenmehrkant korrespondierenden Innenmehrkant aufweist. Es sind auch andere formschlüssige Verbindungen zwischen dem Werkzeug und der Betätigungsschraube möglich.

Im Weiteren wird die vorgeschlagene Erfindung anhand der Zeichnungen näher erläutert. Es zeigen:
Fig. 1 eine perspektivische Ansicht einer möglichen Ausführungsform einer erfindungsgemäßen hydraulischen Steuerung für ein Schiffsgetriebe;
Fig. 2 eine vergrößerte Detailansicht gemäß Figur 1; und

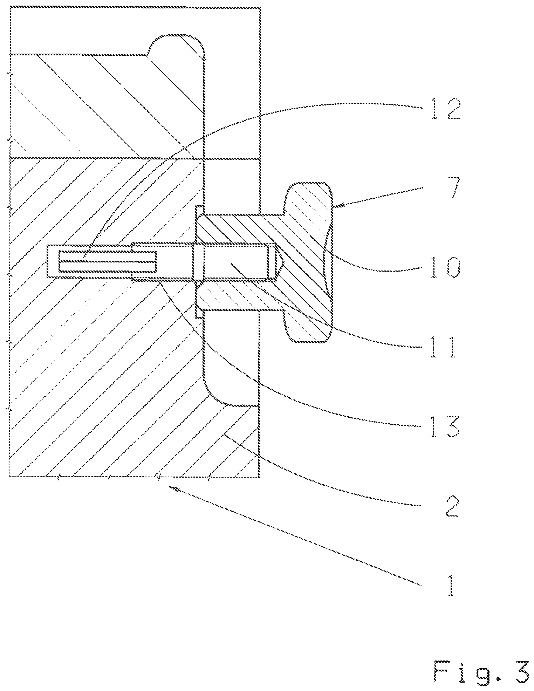

Fig. 3 eine geschnittene Teilansicht gemäß Figur 1.

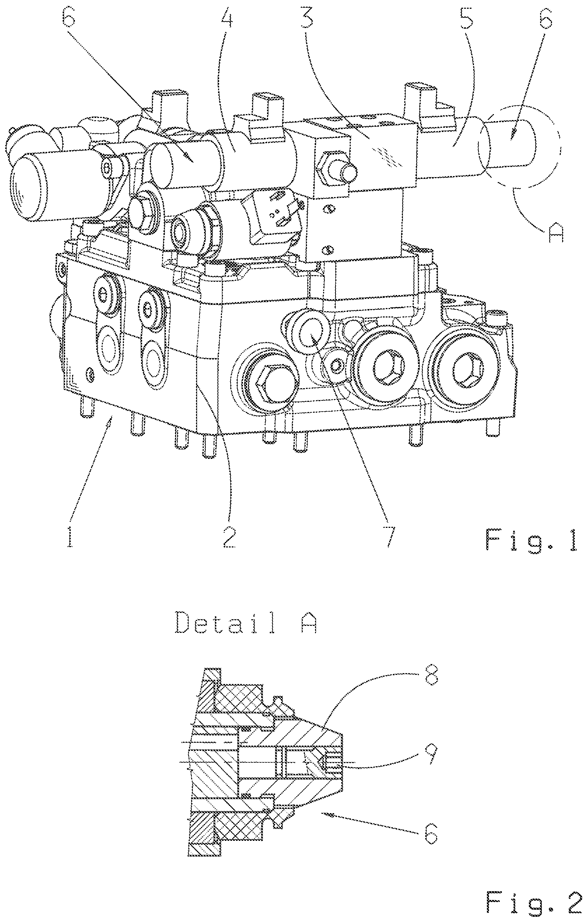

In Figur 1 ist exemplarisch ein mögliches Ausführungsbeispiel für eine hydraulische Steuerung 1 für ein Schiffsgetriebe dargestellt. Die Steuerung 1 umfasst ein Gehäuse 2, auf dem ein Vorsteuerventil 3 angeordnet ist. Das Vorsteuerventil 3 wird im Normalbetrieb elektrisch durch entsprechende Schaltmagnete 4 und 5 betätigt. Um auch bei einem Stromausfall eine Betätigung des Vorsteuerventils 3 sicherzustellen, ist eine Notbetätigungseinrichtung 6 zum manuellen Betätigen des Vorsteuerventils 3 vorgesehen.

Erfindungsgemäß kann die Notbetätigungseinrichtung 6 mit zumindest einem Werkzeug 7 betätigt werden. Auf diese Weise wird eine unbeabsichtigte Betätigung vermieden, da der Bediener aufgrund der Benutzung des Werkzeuges 7 immer nur eine bewusste Betätigung durchführt.

Wie insbesondere aus Figur 2 ersichtlich ist, umfasst die Betätigungseinrichtung 6 eine Betätigungsschraube 8. Die Betätigungsschraube 8 ist über einen Innenmehrkant 9 zur Betätigung mit dem Werkzeug 7 formschlüssig verbindbar. Dazu ist das Werkzeug 7 mit einem Griffbereich 10 ausgeführt, an dem ein längliches Profilelement 11 befestigt ist, an dessen freien Ende ein Aussenmehrkant 12 angeordnet ist. Auf diese Weise kann ein Bediener mit dem Aussenmehrkant 12 in den Innenmehrkant 9 der Betätigungsschraube 8 eingreifen und die Betätigungsschraube 8 drehen, so dass die Notbetätigung aktiviert wird. Die Notbetätigungseinrichtung ist solange aktiv, bis die Betätigungsschraube 8 wieder von dem Bediener zurückgedreht wird. Vorzugsweise sind als Aussenmehrkant 12 und als Innenmehrkant 9 jeweils ein Sechskant vorgesehen.

Das Werkzeug 7 ist in unmittelbarer Nähe des zu betätigenden Vorsteuerventils 3 an dem Gehäuse 2 der Steuerung befestigt. Dazu weist das Gehäuse 2 eine Gewindebohrung 13 auf, in die das Werkzeug 7 einschraubbar ist. Das längliche Profilelement 11 des Werkzeuges 7 weist ein Außengewinde auf, welches mit dem Innengewinde der Gewindebohrung 13 korrespondiert. Auf diese Weise wird das Werkzeug 7 für die Notbetätigung bauraumsparend und in der Nähe des zu betätigenden Vorsteuerventils 3 gelagert, wie dies auch aus Figur 1 ersichtlich ist. Eine Sicherung des Werkzeugs 7 gegen Losdrehen kann z.B. mittels Federringen oder einem Spira-Lock-Gewinde und einer Polyamid-Fleckbeschichtung erfolgen.

### Bezugszeichen

- 1: Steuerung
- 2: Gehäuse
- 3: Vorsteuerventil
- 4: Schaltmagnet
- 5: Schaltmagnet
- 6: Notbetätigungseinrichtung
- 7: Werkzeug
- 8: Betätigungsschraube
- 9: Innenmehrkant
- 10: Griffbereich
- 11: Profilelement
- 12: Aussenmehrkant
- 13: Gewindebohrung

## Patentansprüche

1. Hydraulische Steuerung (1) für ein Schiffsgetriebe mit zumindest einem elektrisch betätigten Vorsteuerventil (3), welches eine Notbetätigungseinrichtung (6) zum manuellen Betätigen des Vorsteuerventils (3) umfasst, wobei die Notbetätigungseinrichtung (6) nur mit einem Werkzeug (7) betätigbar ist, **dadurch gekennzeichnet, dass** als Notbetätigungseinrichtung (6) eine Betätigungsschraube (8) an dem Vorsteuerventil (3) vorgesehen ist.

2. Hydraulische Steuerungsanordnung mit einer hydraulischen Steuerung nach Anspruch 1 und mit einem Werkzeug zum Betätigen der Notbetägigungseinrichtung, **dadurch gekennzeichnet, dass** das Werkzeug (7) in unmittelbarer Nähe des zu betätigenden Vorsteuerventils (3) angeordnet ist.

3. Hydraulische Steuerungsanordnung nach Anspruch 2, dadurch **gek ennzeichnet,** dass das Werkzeug (7) an dem Gehäuse (2) der Steuerung (1) befestigt ist.

4. Hydraulische Steuerungsanordnung nach Anspruch 3, dadurch **gek ennzeichnet,** dass das Werkzeug (7) in einer Gewindebohrung (13) des Gehäuses (2) der Steuerung (1) lösbar befestigt ist.

5. Hydraulische Steuerungsanordnung nach einem der Ansprüche 2 bis 4, **dadurch gekennzeichnet, dass** das Werkzeug (7) einen Griffbereich (10) umfasst, an dem ein Profilelement (11) mit einem Außengewinde vorgesehen ist, an dessen freien Ende ein Aussenmehrkant (12) angeordnet ist.

6. Hydraulische Steuerungsanordnung nach Anspruch 5, dadurch **gek ennzeichnet,** dass die Betätigungsschraube (8) einen mit dem Aussenmehrkant (12) korrespondierenden Innenmehrkant (9) aufweist.

## Claims

1. Hydraulic controller (1) for a marine gear unit, having at least one electrically actuated pilot valve (3), which comprises an emergency-actuation device (6) for the manual actuation of the pilot valve (3), wherein the emergency-actuation device (6) can be actuated only by means of a tool (7), **characterized in that** the emergency-actuation device (6) provided on the pilot valve (3) is an actuating screw (8).

2. Hydraulic control arrangement having a hydraulic controller according to Claim 1 and having a tool for actuating the emergency-actuation device, **characterized in that** the tool (7) is arranged in the immediate vicinity of the pilot valve (3) which is to be actuated.

3. Hydraulic control arrangement according to Claim 2, **characterized in that** the tool (7) is fastened on the housing (2) of the controller (1).

4. Hydraulic control arrangement according to Claim 3, **characterized in that** the tool (7) is fastened in a releasable manner in a threaded bore (13) of the housing (2) of the controller (1).

5. Hydraulic control arrangement according to one of Claims 2 to 4, **characterized in that** the tool (7) comprises a handle region (10), on which is provided a profile element (11) with an external thread, an outer polygonal surface (12) being arranged at the free end of said profile element.

6. Hydraulic control arrangement according to Claim 5, **characterized in that** the actuating screw (8) has a polygonal socket (9), which corresponds with the outer polygonal surface (12).

## Revendications

1. Commande hydraulique (1) pour une transmission de navire, présentant au moins une soupape (3) de pré-commande actionnée électriquement et comprenant un dispositif (6) d'actionnement de secours permettant l'actionnement manuel de la soupape (3) de pré-commande, dispositif (6) d'actionnement de secours ne pouvant être actionné qu'avec un outil (7),
**caractérisée en ce que**
une vis d'actionnement (8) est prévue sur la soupape (3) de pré-commande comme dispositif (6) d'actionnement de secours.

2. Ensemble de commande hydraulique doté d'une commande hydraulique selon la revendication 1 et d'un outil d'actionnement du dispositif d'actionnement de secours, **caractérisé en ce que** l'outil (7) est disposé à proximité immédiate de la soupape (3) de pré-commande à actionner.

3. Ensemble de commande hydraulique selon la revendication 2, **caractérisé en ce que** l'outil (7) est fixé sur le boîtier (2) de la commande (1).

4. Ensemble de commande hydraulique selon la revendication 3, **caractérisé en ce que** l'outil (7) est fixé de manière libérable dans un alésage fileté (13) du boîtier (2) de la commande (1).

5. Ensemble de commande hydraulique selon l'une des revendications 2 à 4, **caractérisé en ce que** l'outil (7) comporte une partie de poignée (10) sur laquelle est prévu un élément profilé (11) doté d'un filet extérieur à l'extrémité libre duquel est disposée une tête (12) à plusieurs pans extérieurs.

6. Ensemble de commande hydraulique selon la revendication 5, **caractérisé en ce que** la vis d'actionnement (8) présente une tête creuse (9) à plusieurs pans qui correspond à la tête (12) à plusieurs pans extérieurs.
